# EUROPEAN PATENT APPLICATION

(11) **EP 4 700 470 A1**
(43) Date of publication of application: **25.02.2026**
(21) Application number: 25193163.0
(22) Date of filing: 31.07.2025
(51) Int. Cl.: G03B 21/20

(54) **ILLUMINATION SYSTEM AND PROJECTION APPARATUS**

(30) Priority: 23.08.2024 CN 202411164772
(71) Applicant: Coretronic Corporation, Hsin-Chu 300 (TW)
(72) Inventor: DENG, Yu-Hsiang, 300 Hsin-Chu (TW); CHANG, Jui, 300 Hsin-Chu (TW)
(74) Representative: Ter Meer Steinmeister & Partner

(57) **Abstract**

An illumination system and a projection apparatus are provided. The illumination system includes a light source module, a wavelength conversion device, a first light guiding assembly, a second light guiding assembly and a microlens array module. The light source module is configured to provide a plurality of green and blue laser beams. The wavelength conversion device is configured to generate a phosphor light beam. The first light guiding assembly and the second light guiding assembly are configured to respectively guide the phosphor light beam and the green laser beams. The phosphor light beam forms a phosphor light spot on a first region of a first side surface of the microlens array module. The plurality of green laser beams form a plurality of green light spots on a second region of the first side surface of the microlens array module. The first region is adjacent to the second region.

## Description

The application claims priority of CN appl. serial no. 202411164772.9 filed on Aug. 23^{rd}, 2024.

### Technical Field

The disclosure relates to an illumination system and a projection apparatus.

### Related Art

A projector includes an illumination system, a light modulation system and a projection lens. Light beams provided by the illumination system mainly include three-color pure laser, laser-excited phosphor powder to produce phosphor light, and light beams from light-emitting diodes. At present, the three-color pure laser has problems such as laser speckle, brightness being limited by packaging, etc. Therefore, to combine the three-color pure laser with the phosphor light produced by the phosphor powder may solve the above problems to a certain extent.

However, since a waveband of green or red laser overlaps with a part of a luminescence waveband of the phosphor light, when combining the green or red laser with the phosphor light, in order to overlap light paths, some optical elements (for example, a transflective lens, a light splitter, etc.) arranged in a path of the green or red laser or phosphor light usually require sacrifice of light with overlapped wavebands, thus resulting in a loss of light energy. **In** order to avoid the above-mentioned loss of light energy, if the green or red laser and the phosphor light are incident to different positions of a light uniformizing element, it probably causes poor light uniformity of the illumination system.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

It is an object of the present invention to provide an illumination system and a projection apparatus which reduces the loss of light energy.

The object is solved by the features of the independent claims.

An embodiment of the disclosure provides an illumination system adapted to provide an illumination beam and includes a light source module, a wavelength conversion device, a first light guiding assembly, a second light guiding assembly and a microlens array module. The light source module is configured to provide a plurality of green laser beams and a plurality of blue laser beams. The wavelength conversion device includes a wavelength conversion region and a wavelength non-conversion region, the wavelength conversion region and the wavelength non-conversion region are adapted to enter a transmission path of the plurality of blue laser beams at different time periods, and the wavelength conversion region is configured to convert the plurality of blue laser beams to generate a phosphor light beam. The microlens array module is disposed in a transmission path of the plurality of green laser beams, the plurality of blue laser beams and the phosphor light beam, and the plurality of green laser beams, the plurality of blue laser beams and the phosphor light beam are incident to the microlens array module via a first side surface of the microlens array module, the first side surface includes a first region and a second region adjacent with each other, and the plurality of green laser beams, the plurality of blue laser beams and the phosphor light beam are emitted from a second side surface of the microlens array module to serve as the illumination beam. The first light guiding assembly is disposed in the transmission path of the plurality of blue laser beams to guide the plurality of blue laser beams from the light source module to the wavelength conversion device, and guide the phosphor light beam from the wavelength conversion region to the first region of the first side surface of the microlens array module, and the phosphor light beam forms a phosphor light spot on the first region. The second light guiding assembly is disposed in the transmission path of the plurality of green laser beams to guide the plurality of green laser beams to the second region of the first side surface of the microlens array module, and the plurality of green laser beams form a plurality of green light spots on the second region.

Another embodiment of the disclosure provides a projection apparatus including the illumination system as described above, a light modulation system and a projection lens, wherein the illumination system is configured to provide the illumination beam, the light modulation system is configured to convert the illumination beam to provide an image beam, and the projection lens is configured to project the image beam out of the projection apparatus.

In one or more embodiments, the first light guiding assembly may be further configured to guide the plurality of blue laser beams from the wavelength non-conversion region to the first region of the first side surface of the microlens array module.

In one or more embodiments, the plurality of blue laser beams may form a plurality of blue light spots on the first region.

In one or more embodiments, the first light guiding assembly may comprise a light splitting element located between the light source module and the wavelength conversion device.

In one or more embodiments, the light splitting element may comprise an effective optical region.

In one or more embodiments, the effective optical region may be configured to allow the plurality of blue laser beams from the light source module to pass through and reflect the phosphor light beam from the wavelength conversion device.

In one or more embodiments, an orthogonal projection of the effective optical region on the first side surface of the microlens array module may not overlapped with an orthogonal projection of the second light guiding assembly on the first side surface of the microlens array module.

In one or more embodiments, the first light guiding assembly may comprises a reflecting mirror.

In one or more embodiments, the effective optical region may comprise a first sub-effective region and a second sub-effective region.

In one or more embodiments, the first sub-effective region may be configured to allow the plurality of blue laser beams transmitted from the light source module to the wavelength conversion device to pass through.

In one or more embodiments, the second sub-effective region may be configured to reflect a first part of the plurality of blue laser beams from the wavelength non-conversion region, and to allow a second part of the plurality of blue laser beams from the wavelength non-conversion region to pass through.

In one or more embodiments, the reflecting mirror may be disposed in a transmission path of the second part of the plurality of blue laser beams to reflect the second part of the plurality of blue laser beams.

In one or more embodiments, the second light guiding assembly may comprise a reflecting mirror for reflecting the plurality of green laser beams to the second region of the first side surface of the microlens array module.

In one or more embodiments, the second light guiding assembly may comprise a transflective lens for reflecting a first part of the plurality of green laser beams from the light source module and allowing a second part of the plurality of green laser beams to pass through.

In one or more embodiments, the reflecting mirror of the second light guiding assembly may be disposed in a transmission path of the second part of the plurality of green laser beams to reflect the second part of the plurality of green laser beams.

In one or more embodiments, the second region of the first side surface of the microlens array module may comprise a first sub-region and a second sub-region.

In one or more embodiments, the first sub-region and the second sub-region may be respectively adjacent to the first region.

In one or more embodiments, the first region may be located between the first sub-region and the second sub-region.

In one or more embodiments, the first part of the plurality of green laser beams may be transmitted to the first sub-region by the transflective lens.

In one or more embodiments, the second part of the plurality of green laser beams may be transmitted to the second sub-region by the reflecting mirror of the second light guiding assembly.

In one or more embodiments, the light source module may be further configured to provide a plurality of red laser beams.

In one or more embodiments, the second light guiding assembly may be further disposed in a transmission path of the plurality of red laser beams to guide the plurality of red laser beams to the second region of the first side surface of the microlens array module.

In one or more embodiments, the plurality of red laser beams may form a plurality of red light spots on the second region.

In one or more embodiments, the second light guiding assembly may comprise a first red light splitter.

In one or more embodiments, the first red light splitter may be disposed in a transmission path of a first part of the plurality of red laser beams to reflect the first part of the plurality of red laser beams to the microlens array module, and to allow a first part of the plurality of green laser light beams to pass through.

In one or more embodiments, the second light guiding assembly may further comprise a second red light splitter.

In one or more embodiments, the second red light splitter may be disposed in a transmission path of a second part of the plurality of red laser beams to reflect the second part of the plurality of red laser beams to the microlens array module, and to allow a second part of the plurality of green laser beams to pass through.

In one or more embodiments, the second region of the first side surface of the microlens array module may comprise a first sub-region and a second sub-region.

In one or more embodiments, the first sub-region and the second sub-region may be respectively adjacent to the first region.

In one or more embodiments, the first region may be located between the first sub-region and the second sub-region.

In one or more embodiments, the first part of the plurality of red laser beams may be transmitted to the first sub-region by the second light guiding assembly.

In one or more embodiments, the second part of the plurality of red laser beams may be transmitted to the second sub-region by the second light guiding assembly.

In one or more embodiments, the first light guiding assembly may be further configured to guide the plurality of blue laser beams from the wavelength non-conversion region to the microlens array module.

In one or more embodiments, the plurality of blue laser beams may guide by the first light guiding assembly to form a plurality of blue light spots on the second region of the first side surface of the microlens array module.

In one or more embodiments, the first light guiding assembly may comprise a red-green light splitting element, a turning assembly, a transflective lens, and a reflecting mirror.

In one or more embodiments, the red-green light splitting element may be located between the light source module and the wavelength conversion device, and may be configured to allow the plurality of blue laser beams from the light source module to pass through, and to reflect the phosphor light beam from the wavelength conversion region so as to transmit the phosphor light beam to the first region of the microlens array module.

In one or more embodiments, the turning assembly is may be disposed at an end of the wavelength conversion device relatively far away from the light source module to transmit the plurality of blue laser beams passing through the wavelength non-conversion region to the transflective lens.

In one or more embodiments, the transflective lens may be configured to allow a first part of the plurality of blue laser beams from the wavelength conversion device to pass through, and to reflect a second part of the plurality of blue laser beams.

In one or more embodiments, the reflecting mirror may be disposed in a transmission path of the first part of the plurality of blue laser beams to reflect the first part of the plurality of blue laser beams.

In one or more embodiments, the second region of the first side surface of the microlens array module may comprise a first sub-region and a second sub-region.

In one or more embodiments, the first sub-region and the second sub-region may be respectively adjacent to the first region.

In one or more embodiments, the first region may be located between the first sub-region and the second sub-region.

In one or more embodiments, the first part of the plurality of blue laser beams may be transmitted to the first sub-region of the microlens array module by the first light guiding assembly.

In one or more embodiments, the second part of the plurality of blue laser beams may be transmitted to the second sub-region of the microlens array module by the first light guiding assembly.

In one or more embodiments, the microlens array module may comprise a first microlens array element, a focusing lens element and a second microlens array element.

In one or more embodiments, the focusing lens element may be located between the first microlens array element and the second microlens array element.

In one or more embodiments, the first microlens array element may have the first side surface.

In one or more embodiments, the second microlens array element may have the second side surface.

In one or more embodiments, the plurality of green laser beams, the plurality of blue laser beams and the phosphor light beam may enter the microlens array module via the first side surface of the first microlens array element.

In one or more embodiments, the plurality of green laser beams, the plurality of blue laser beams and the phosphor light beam may be emitted from the second side surface of the second microlens array element after passing through the focusing lens element.

In one or more embodiments, the first microlens array element may be an integrated double-sided microlens array structural element, or may be composed of two single-sided microlens array structural elements arranged by facing away from each other.

In one or more embodiments, the second microlens array element may be an integrated double-sided microlens array element, or may be composed of two single-sided microlens array structural elements arranged by facing away from each other.

In one or more embodiments, a light incident surface of the first microlens array element may be the first side surface, the first side surface may have a plurality of first micromirror structures.

In one or more embodiments, a light output surface of the first microlens array element may have a plurality of second micromirror structures.

In one or more embodiments, the plurality of first micromirror structures may respectively correspond to the plurality of second micromirror structures.

In one or more embodiments, a plurality of light spots of the plurality of green laser beams, the plurality of blue laser beams and the phosphor light beam on a light incident surface of the second microlens array element may at least partially overlap to form an overlapping region.

In one or more embodiments, a ratio of an area of the overlapping region to an area of the light spot of the phosphor light beam on the second side surface of the second microlens array element may be greater than 0.5.

Other objectives, features and advantages of the present disclosure will be further understood from the further technological features disclosed by the embodiments of the present disclosure wherein there are shown and described preferred embodiments of this disclosure, simply by way of illustration of modes best suited to carry out the disclosure.

### BRIEF DESCRIPTION OF THE DRAWINGS

FIG. 1 is a schematic diagram of the projection apparatus of the embodiment of the disclosure.
FIG. 2A, FIG. 2C and FIG. 2E are schematic diagrams of the illumination system of the first embodiment of the disclosure.
FIG. 2B, FIG. 2D and FIG. 2F are respectively schematic diagrams illustrating light spots on the first microlens array element in FIG. 2A, FIG. 2C and FIG. 2E.
FIG. 2G shows power curves of laser elements of the illumination system of the first embodiment.
FIG. 2H is a schematic diagram of the wavelength conversion device of the first embodiment.
FIG. 2I is a schematic diagram illustrating luminescence wavebands of laser elements of three colors and a phosphor light beam generated by green phosphor powder.
FIG. 2J is a schematic diagram illustrating luminescence wavebands of laser elements of three colors and a phosphor light beam generated by yellow phosphor powder.
FIG. 2K is a schematic diagram illustrating luminescence wavebands of laser elements of three colors and a phosphor light beam generated by red phosphor powder.
FIG. 3A, FIG. 3B, FIG. 3C and FIG. 3D are schematic diagrams of the illumination system according to the second embodiment.
FIG. 3E is a schematic diagram illustrating light spots on the first microlens array element in FIG. 3A, FIG. 3B, FIG. 3C and FIG. 3D.
FIG. 3F illustrates power curves of the laser elements of the illumination system according to the second embodiment of the disclosure.
FIG. 3G is a schematic diagram of the wavelength conversion device of the second embodiment.
FIG. 4A-D are schematic diagrams of the illumination system of the third embodiment.
FIG. 4E is a schematic diagram illustrating light spots on the first microlens array element in FIG. 4A, FIG. 4B, FIG. 4C and FIG. 4D.
FIG. 5A schematic diagram of the illumination system of the fourth embodiment of the disclosure.
FIG.5B is a schematic diagram of light spots on the first microlens array element in FIG.5A.
FIG.6A schematic diagram of the illumination system of the fifth embodiment of the disclosure.
FIG. 6B schematic diagram illustrating light spots on the first microlens array element in FIG. 6A.

### DESCRIPTION OF THE EMBODIMENTS

In the following detailed description of the preferred embodiments, reference is made to the accompanying drawings which form a part hereof, and in which are shown by way of illustration specific embodiments in which the disclosure may be practiced. In this regard, directional terminology, such as "top," "bottom," "front," "back," etc., is used with reference to the orientation of the Figure(s) being described. The components of the present disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the appended claims. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

The disclosure provides an illumination system and a projection apparatus, which are adapted to avoid energy consumption and have good light uniformity.

Additional aspects and advantages of the present disclosure will be set forth in the description of the techniques disclosed in the present disclosure.

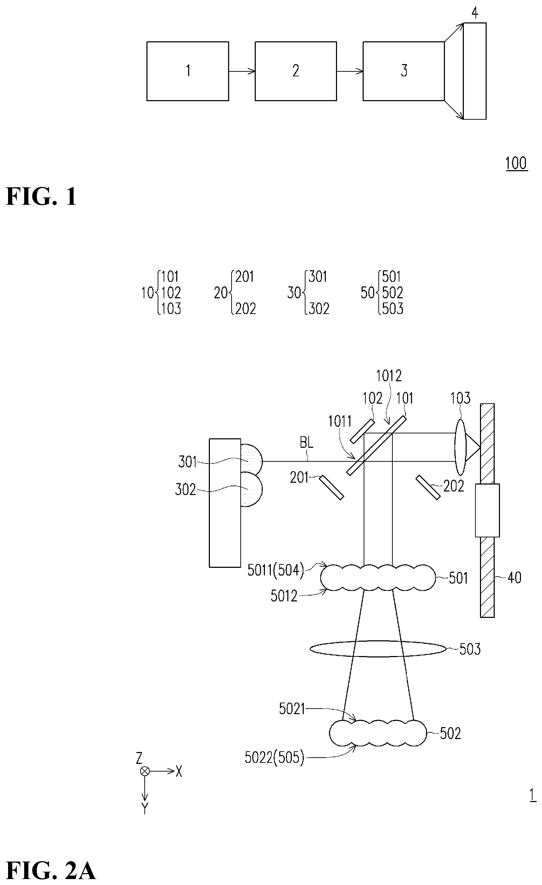

Referring to FIG. 1, FIG. 1 is a schematic diagram of a projection apparatus according to an embodiment of the disclosure. A projection apparatus 100 includes an illumination system 1, a light modulation system 2 and a projection lens 3. The illumination system 1 is configured to provide an illumination beam. The light modulation system 2 is configured to convert the illumination beam to provide an image beam. The projection lens 3 is configured to project the image beam out of the projection apparatus 100 to form an image on a projection surface 4.

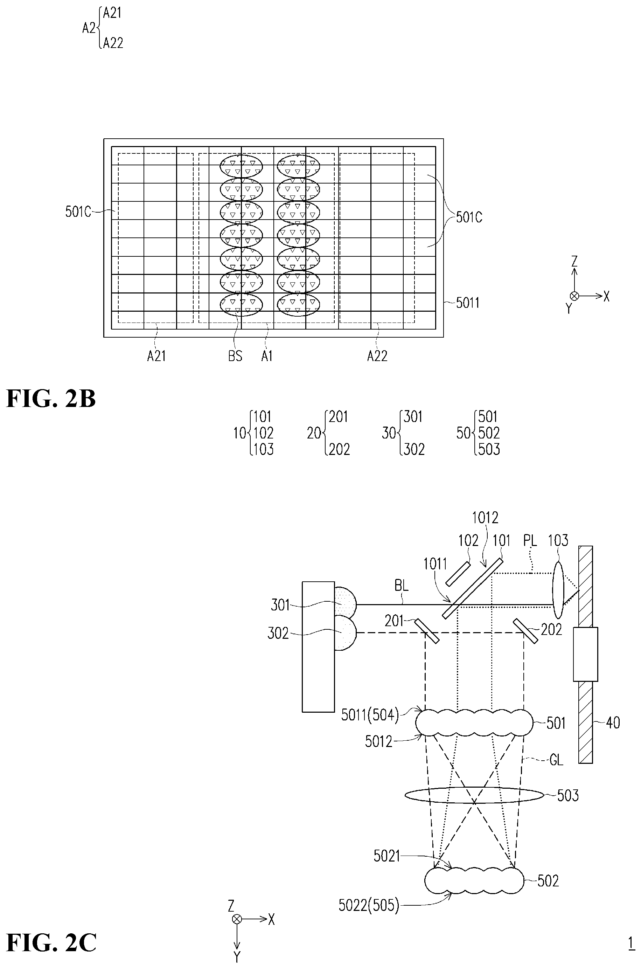

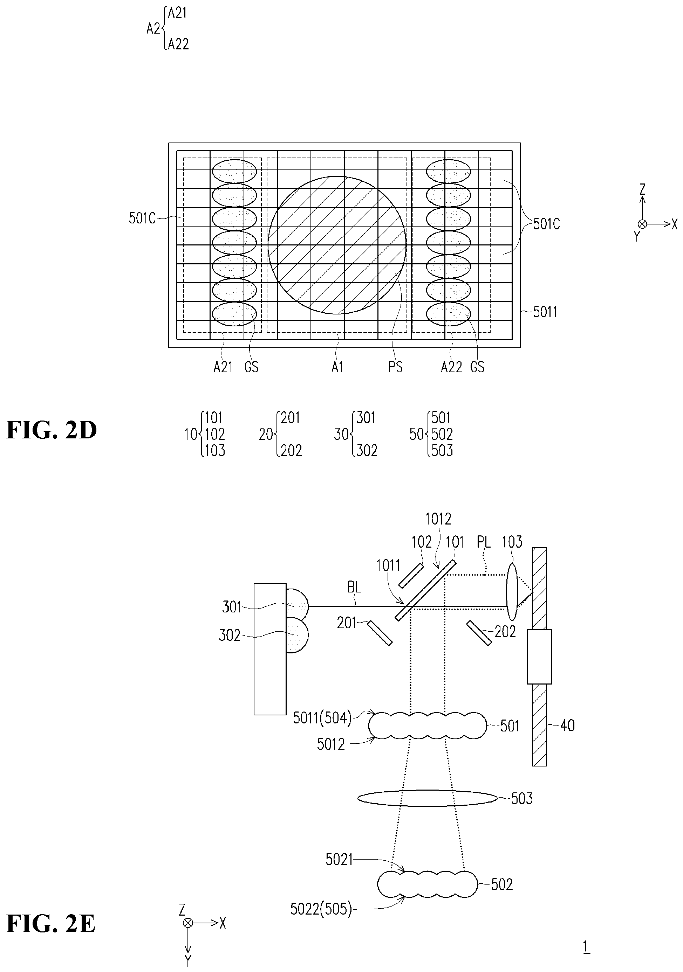

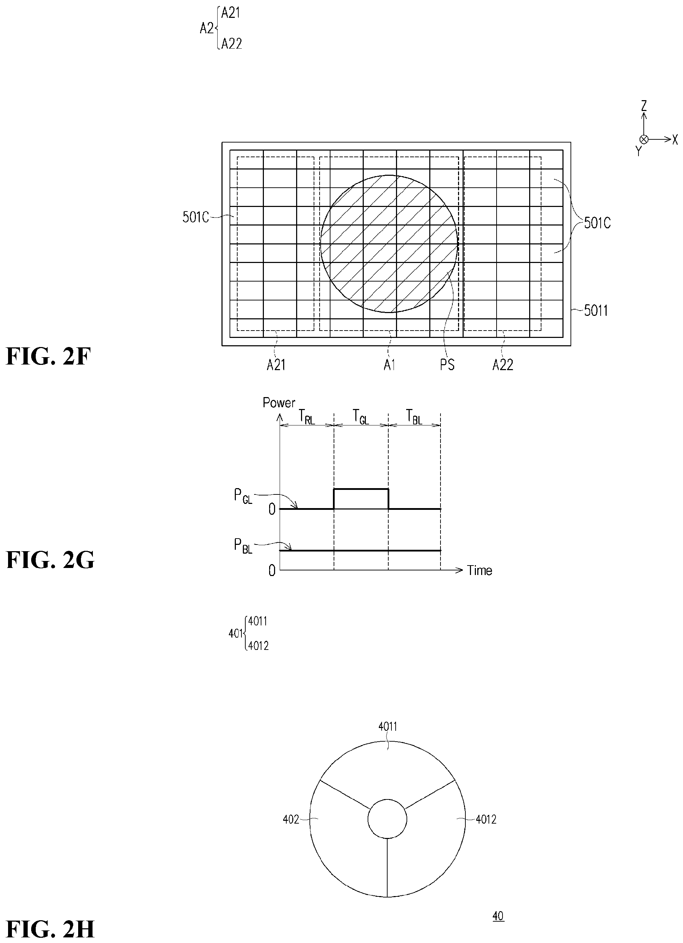

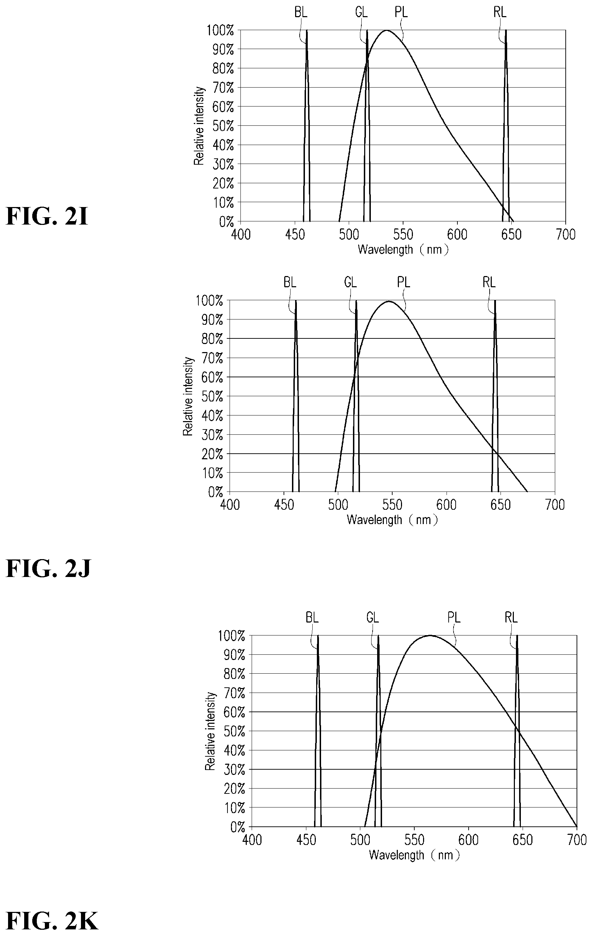

Referring to FIG. 2A to FIG. 2H. FIG. 2A, FIG. 2C and FIG. 2E are schematic diagrams of an illumination system according to a first embodiment of the disclosure. FIG. 2B, FIG. 2D and FIG. 2F are respectively schematic diagrams illustrating light spots on a first microlens array element in FIG. 2A, FIG. 2C and FIG. 2E. FIG. 2G illustrates power curves of various laser elements of the illumination system of the first embodiment. FIG. 2H is a schematic diagram of a wavelength conversion device of the first embodiment.

The illumination system 1 includes a light source module 30, a wavelength conversion device 40, a first light guiding assembly 10, a second light guiding assembly 20 and a microlens array module 50. The light source module 30 is configured to provide a plurality of green laser beams GL and a plurality of blue laser beams BL. The wavelength conversion device 40 includes a wavelength conversion region 401 and a wavelength non-conversion region 402. The wavelength conversion region 401 and the wavelength non-conversion region 402 are suitable for entering a transmission path of the plurality of blue laser beams BL at different time periods. The wavelength conversion region 401 is configured to convert the plurality of blue laser beams BL to generate a phosphor light beam PL. The microlens array module 50 is disposed in a transmission path of the plurality of green laser beams GL, the plurality of blue laser beams BL and the phosphor light beam PL. The plurality of green laser beams GL, the plurality of blue laser beams BL and the phosphor light beam PL are incident to the microlens array module 50 from a first side surface 504 of the microlens array module 50, where the first side surface 504 includes a first region A1 and a second region A2 adjacent with each other, and the plurality of green laser beams GL, the plurality of blue laser beams BL and the phosphor light beam PL are emitted from a second side surface 505 of the microlens array module 50 to serve as the illumination beam. The first light guiding assembly 10 is disposed in the transmission path of the plurality of blue laser beams BL to guide the plurality of blue laser beams BL from the light source module 30 to the wavelength conversion device 40, and guide the phosphor light beam PL from the wavelength conversion region 401 to the first region A1 of the first side surface 504 of the microlens array module 50, and the phosphor light beam PL forms a phosphor light spot PS on the first region A1. The second light guiding assembly 20 is disposed in the transmission path of the plurality of green laser beams GL to guide the plurality of green laser beams GL to the second region A2 of the first side surface 504 of the microlens array module 50, and the plurality of green laser beams GL form a plurality of green light spots GS on the second region A2.

The light source module 30 includes a plurality of blue laser elements 301 and a plurality of green laser elements 302. The laser elements are, for example, laser diodes, but the disclosure is not limited thereto. The plurality of blue laser elements 301 are arranged along a Z direction for providing the plurality of blue laser beams BL. The plurality of green laser elements 302 are arranged along the Z direction for providing the plurality of green laser beams GL.

The microlens array module 50 includes a first microlens array element 501, a focusing lens element 503 and a second microlens array element 502 sequentially arranged along a Y direction, where the Y direction is perpendicular to the Z direction. The focusing lens element 503 is located between the first microlens array element 501 and the second microlens array element 502. The microlens array module 50 includes the first side surface 504 and the second side surface 505, wherein light enters the microlens array module 50 via the first side surface 504 and the microlens array module 50 emits light via the second side surface 505. Specifically, the first microlens array element 501 has the first side surface 504, and the second microlens array element 502 has the second side surface 505. The plurality of green laser beams GL, the plurality of blue laser beams BL and the phosphor light beam PL are incident through the first side surface 504 of the first microlens array element 501, and emitted from the second side surface 505 of the second microlens array element 502 after passing through the focusing lens element 503. The first microlens array element 501 has a light incident surface 5011 and a light output surface 5012, and the light incident surface 5011 of the first microlens array element 501 is the first side surface 504. The light incident surface 5011 of the first microlens array element 501 has a plurality of first micromirror structures 501C, and the light output surface 5012 has a plurality of second micromirror structures respectively corresponding to the plurality of first micromirror structures 501C. A central axis of each first micromirror structure 501C on the light incident surface 5011 overlaps with a central axis of the corresponding second micromirror structure on the light output surface 5012. A curvature of each first micromirror structure 501C on the light incident surface 5011 and a curvature of the corresponding second micromirror structure on the light output surface 5012 may be the same or different. In an embodiment, a shape of the first micromirror structure 501C may be hexagonal or quadrilateral, but the disclosure is not limited thereto. The second microlens array element 502 has a light incident surface 5021 and a light output surface 5022, and the light output surface 5022 of the second microlens array element 502 is the second side surface 505. The light incident surface 5021 of the second microlens array element 502 has a plurality of micromirror structures, and the light output surface 5022 has a plurality of corresponding micromirror structures. A central axis of each micromirror structure on the light incident surface 5021 overlaps with a central axis of the corresponding micromirror structure on the light output surface 5022. A curvature of each micromirror structure on the light incident surface 5021 and a curvature of the corresponding micromirror structure on the light output surface 5022 may be the same or different. In an embodiment, a shape of the micromirror structure on the light incident surface 5021 may be rectangular, but the disclosure is not limited thereto. In the embodiment, the first microlens array element 501 and the second microlens array element 502 are both an integrated double-sided microlens array structural element, but the disclosure is not limited thereto. In some embodiments, the first microlens array element 501 and the second microlens array element 502 may be composed of two single-sided microlens array structural elements arranged by facing away from each other.

Referring to FIG. 2H, the wavelength conversion device 40 may include a color wheel. The color wheel is a rotating member and includes a wavelength conversion region 401 and a wavelength non-conversion region 402 arranged in a ring shape or a C shape along a rotation axis. By rotating the color wheel, the wavelength conversion region 401 and the wavelength non-conversion region 402 may enter the transmission path of the plurality of blue laser beams BL at different time periods. Phosphor powder is disposed on the wavelength conversion region 401 for converting the plurality of blue laser beams BL to generate the phosphor light beam PL. Specifically, the wavelength conversion region 401 may include a red light region 4011 and a green light region 4012. The red light region 4011 is suitable for entering the transmission path of the plurality of blue laser beams BL in a red light time period, and the green light region 4012 is suitable for entering the transmission path of the plurality of blue laser beams BL in a green light time period. In an embodiment, both of the red light region 4011 and the green light region 4012 may be yellow phosphor powder used to convert and generate a yellow phosphor light beam PL, but the disclosure is not limited thereto. In other embodiments, the red light region 4011 may be a red phosphor powder used to convert and generate a red phosphor light beam PL, and the green light region 4012 may be a green phosphor powder used to convert and generate a green phosphor light beam PL. The wavelength non-conversion region 402 may be provided with a reflecting mirror, which is suitable for entering the transmission path of the plurality of blue laser beams BL in a blue light time period to reflect the plurality of blue laser beams BL.

To be specific, referring to FIG. 2G, in a red light time period T_{RL}, a power P_{BL} of the plurality of blue laser elements 301 is greater than 0 so as to provide the plurality of blue laser beams BL, and a power P_{GL} of the plurality of green laser elements 302 is 0, and no green laser beam GL is provided. In a green light time period T_{GL}, the power P_{BL} of the plurality of blue laser elements 301 is greater than 0 so as to provide the plurality of blue laser beams BL, and the power P_{GL} of the plurality of green laser elements 302 is greater than 0 so as to provide the plurality of green laser beams GL. In a blue light time period T_{BL}, the power P_{BL} of the plurality of blue laser elements 301 is greater than 0 so as to provide the plurality of blue laser beams BL, and the power P_{GL} of the plurality of green laser elements 302 is 0, and no green laser beam GL is provided. Furthermore, the light source module 30 periodically repeats the red light time period T_{RL}, the green light time period T_{GL}, and the blue light time period T_{BL} shown in FIG. 2G.

As shown in FIG. 2E, FIG. 2F and FIG. 2G, in the red light time period T_{RL}, the plurality of blue laser elements 301 are enabled to provide the plurality of blue laser beams BL, and the red light region 4011 of the wavelength conversion region 401 enters the transmission path of the plurality of blue laser beams BL. The phosphor powder in the red light region 4011 of the wavelength conversion region 401 is irradiated by the plurality of blue laser beams BL to generate the phosphor light beam PL. The phosphor light beam PL is guided by the first light guiding assembly 10 and transmitted to the microlens array module 50, and forms a phosphor light spot PS on the first region A1 of the light incident surface 5011 (i.e., the first side surface 504) of the first microlens array element 501, as shown in FIG. 2F.

As shown in FIG. 2C, FIG. 2D and FIG. 2G, in the green light time period T_{GL}, the plurality of blue laser elements 301 are enabled to provide the plurality of blue laser beams BL, and the plurality of green laser elements 302 are enabled to provide the plurality of green laser beams GL. At this time, the green light region 4012 of the wavelength conversion region 401 enters the transmission path of the plurality of blue laser beams BL. The phosphor powder in the green light region 4012 of the wavelength conversion region 401 is irradiated by the plurality of blue laser beams BL to generate the phosphor light beam PL. The phosphor light beam PL is guided by the first light guiding assembly 10 and transmitted to the microlens array module 50, and forms a phosphor light spot PS on the first region A1 of the light incident surface 5011 of the first microlens array element 501. At the same time, the second light guiding assembly 20 guides the plurality of green laser beams GL to the microlens array module 50, and the plurality of green laser beams GL form a plurality of green light spots GS on the second region A2 of the light incident surface 5011 (i.e. the first side surface 504) of the first microlens array element 501, as shown in FIG. 2D.

As shown in FIG. 2A, FIG. 2B and FIG. 2G, in the blue light time period T_{BL}, the plurality of blue laser elements 301 are enabled to provide the plurality of blue laser beams BL, and the wavelength non-conversion region 402 enters the transmission path of the plurality of blue laser beams BL. The plurality of blue laser beams BL are reflected by the wavelength non-conversion region 402. The first light guiding assembly 10 guides the plurality of blue laser beams BL from the wavelength non-conversion region 402 to the microlens array module 50, and the plurality of blue laser beams BL form a plurality of blue light spots BS on the first region A1 of the light incident surface 5011 (i.e., the first side surface 504) of the first microlens array element 501, as shown in FIG. 2B.

Through the periodic time periods shown in FIG. 2G, the illumination system 1 of the embodiment may output an illumination beam from the second microlens array element 502 of the microlens array module 50. The illumination beam is emitted from the light output surface 5022 (i.e., the second side surface 505) of the second microlens array element 502, and includes the phosphor light beam PL, the green laser beams GL and the blue laser beams BL in the red light time period T_{RL}, the green light time period T_{GL} and the blue light time period T_{BL}.

In the embodiment, the first light guiding assembly 10 includes a light splitting element 101, a reflecting mirror 102 and a focusing lens 103. The light splitting element 101 is located between the light source module 30 and the wavelength conversion device 40. The light splitting element 101 includes an effective optical region. The effective optical region refers to a region capable of transmitting the plurality of blue laser beams BL from the light source module 30 and reflecting the phosphor light beam PL from the wavelength conversion device 40. Specifically, the effective optical region includes a first sub-effective region 1011 and a second sub-effective region 1012 that do not overlap each other. The first sub-effective region 1011 is located in the transmission path of the plurality of blue laser beams BL from the light source module 30, and may allow the plurality of blue laser beams BL transmitted from the light source module 30 to the wavelength conversion device 40 to pass through, and reflect the phosphor light beam PL from the wavelength conversion device 40. The second sub-effective region 1012 may reflect a first part of the plurality of blue laser beams BL from the wavelength non-conversion region 402, and allow a second part of the plurality of blue laser beams BL from the wavelength non-conversion region 402 to pass through, and reflect the phosphor light beam PL from the wavelength conversion device 40. The second sub-effective region 1012 is not be located in the transmission path of the plurality of blue laser beams BL transmitted from the light source module 30 to the wavelength conversion device 40. The reflecting mirror 102 is disposed in the transmission path of the second part of the plurality of blue laser beams BL, and is configured to reflect the second part of the plurality of blue laser beams BL. The focusing lens 103 is located between the light splitting element 101 and the wavelength conversion device 40, and is configured to focus the plurality of blue laser beams BL from the light splitting element 101 on the wavelength conversion device 40. Accordingly, as shown in FIG. 2A and FIG. 2B, the plurality of blue laser beams BL form two columns of blue light spots BS on the first region A1 of the light incident surface 5011, which improves light uniformity of the illumination system 1.

In the embodiment, as shown in FIG. 2C and FIG. 2D, the second light guiding assembly 20 includes a transflective lens 201 and a reflecting mirror 202 arranged along an X direction, where the X direction, Y direction and Z directions are perpendicular to each other. The second region A2 of the first side surface 504 of the microlens array module 50 includes a first sub-region A21 and a second sub-region A22. The first sub-region A21 and the second sub-region A22 are respectively adjacent to the first region A1, and the first region A1 is located between the first sub-region A21 and the second sub-region A22, and the first sub-region A21, the first region A1 and the second sub-region A22 are arranged sequentially along the X direction. The transflective lens 201 is configured to reflect a first part of the plurality of green laser beams GL from the light source module 30 and allow a second part of the plurality of green laser beams GL to pass through. In an embodiment, the transflective lens 201 may transmit and reflect the plurality of green laser beams GL at a ratio of 50% each. However, in other embodiments, the ratio of transmission and reflection of the transflective lens 201 may be adjusted according to actual needs.

The first part of the plurality of green laser beams GL is transmitted to the first sub-region A21 of the second region A2 by the transflective lens 201 to form the plurality of green light spots GS arranged along the Z direction. The reflecting mirror 202 is disposed in the transmission path of the second part of the plurality of green laser beams GL to reflect the second part of the plurality of green laser beams GL to the second sub-region A22 of the second region A2 of the first side surface 504 of the microlens array module 50. The plurality of green laser beams GL form the plurality of green light spots GS arranged along the Z direction on the second sub-region A22 of the second region A2. Accordingly, the plurality of green laser beams GL respectively form the plurality of green light spots GS on the first sub-region A21 and the second sub-region A22, which improves the light uniformity of the illumination system 1.

Referring to FIG. 2I to FIG. 2K, which are respectively schematic diagrams of luminescence wavebands of laser elements of three colors and a phosphor light beam generated by green, yellow or red phosphor powders. Since the luminescence waveband of the phosphor light beam PL in the embodiment completely covers the luminescence waveband of the green laser beam GL, if the second light guiding assembly 20 is disposed in the transmission path of the phosphor light beam PL, the transflective lens 201 may probably cause certain wavebands of the phosphor light beam PL to be reflected, and the reflecting mirror 202 may also probably block propagation of the phosphor light beam PL, causing energy loss. Therefore, in the embodiment, an orthogonal projection of the effective optical region of the light splitting element 101 on the light incident surface 5011 (i.e., the first side surface 504) of the first microlens array element 501 is not overlapped with an orthogonal projection of the second light guiding assembly 20 on the light incident surface 5011 (i.e., the first side surface 504). Accordingly, energy loss of the phosphor light beam PL may be avoided.

In addition, in the embodiment, the phosphor light spot PS is formed on the first region A1 of the light incident surface 5011 (i.e., the first side surface 504), and the green light spots GS are formed on the second region A2 that is adjacent to and not overlapped to the first region A1 (as shown in FIG. 2D). By disposing the focusing lens element 503 between the first microlens array element 501 and the second microlens array element 502, the light spots of the plurality of green laser beams GL on the light incident surface 5021 of the second microlens array element 502 may at least partially overlap the light spot of the phosphor light beam PL (as shown in FIG. 2C). More specifically, as shown in FIG. 2A, FIG. 2C and FIG. 2E, on the light incident surface 5021 of the second microlens array element 502, the plurality of light spots of the phosphor light beam PL, the plurality of green laser beams GL and the plurality of blue laser beams BL at least partially overlap to form an overlapping region, so that the illumination system 1 has good light uniformity. In some embodiments, a ratio of an area of the overlapping region to an area of the light spot of the phosphor light beam PL on the light incident surface 5021 is greater than 0.5, but the disclosure is not limited thereto.

In order to fully illustrate various implementation aspects of the disclosure, other embodiments of the disclosure will be described below. It should be noticed that reference numbers of the components and a part of contents of the aforementioned embodiment are also used in the following embodiment, where the same reference numbers denote the same or like components, and descriptions of the same technical contents are omitted. The aforementioned embodiment may be referred for descriptions of the omitted parts, and detailed descriptions thereof are not repeated in the following embodiment.

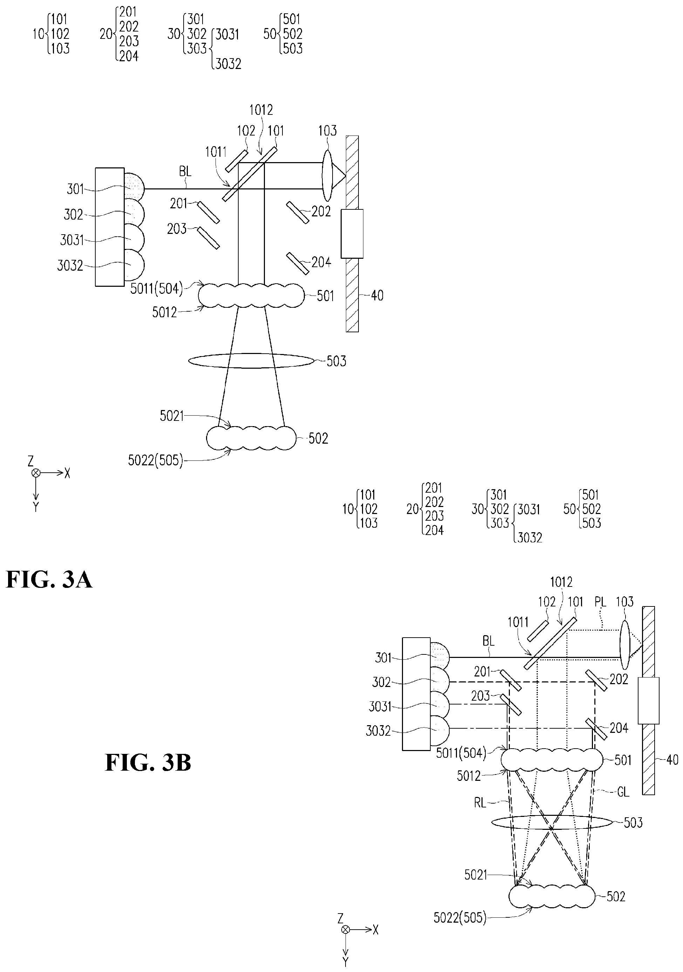

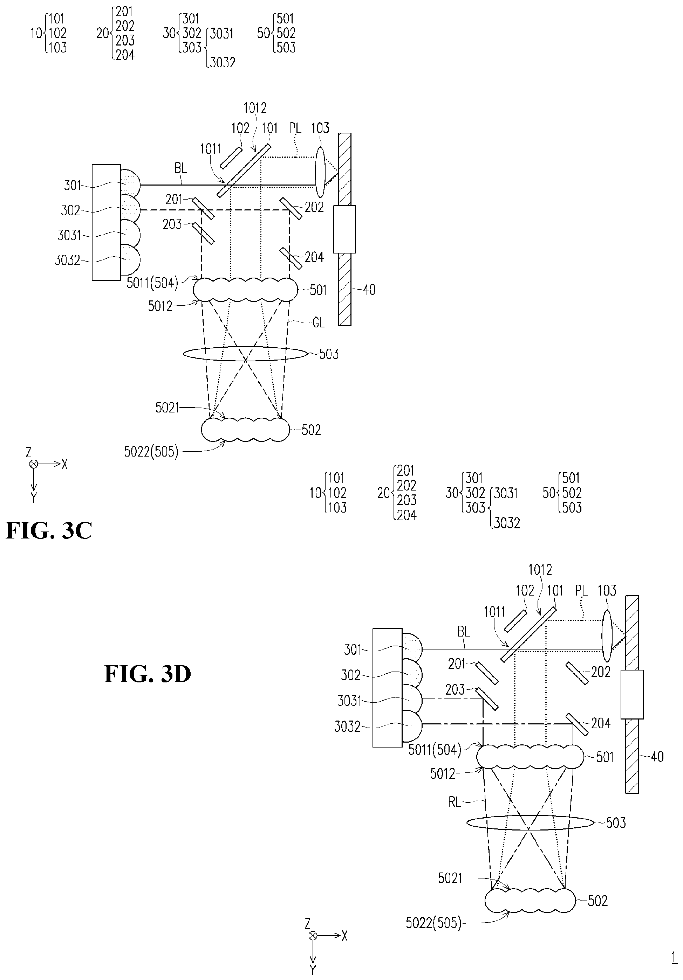

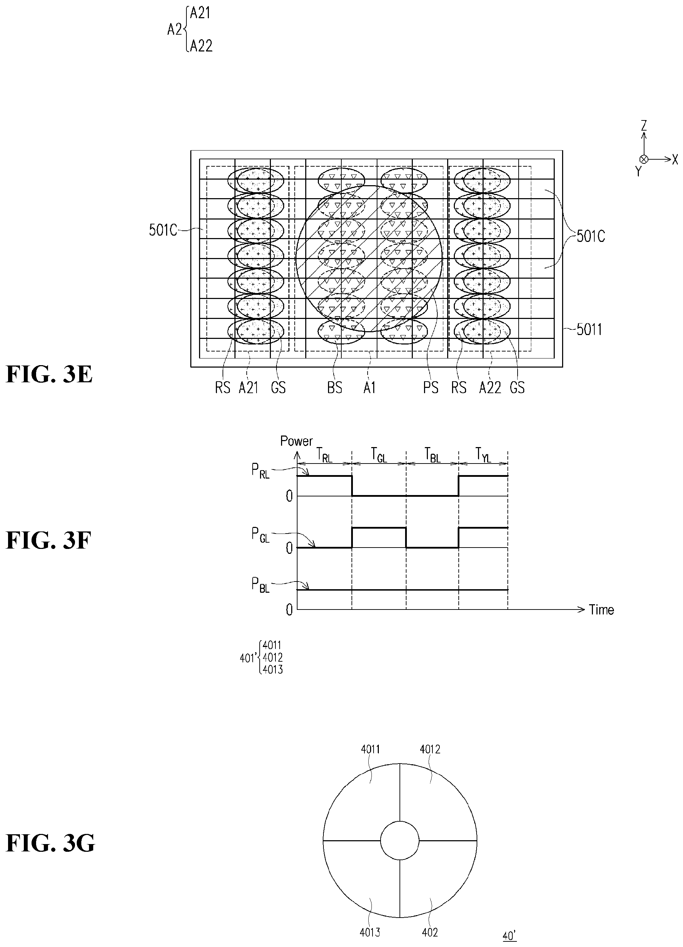

Referring to FIG. 3A to FIG. 3G. FIG. 3A, FIG. 3B, FIG. 3C and FIG. 3D are schematic diagrams of an illumination system according to a second embodiment. FIG. 3E is a schematic diagram of light spots on a first microlens array element in FIG. 3A, FIG. 3B, FIG. 3C and FIG. 3D.

FIG. 3F illustrates power curves of various laser elements of the illumination system according to the second embodiment of the disclosure. FIG. 3G is a schematic diagram of a wavelength conversion device of the second embodiment.

The illumination system 1 includes the light source module 30, the wavelength conversion device 40, the first light guiding assembly 10, the second light guiding assembly 20 and the microlens array module 50.

The light source module 30 includes the plurality of blue laser elements 301, the plurality of green laser elements 302, and a plurality of red laser elements 3031, 3032. The plurality of blue laser elements 301 are arranged along the Z direction for providing the plurality of blue laser beams BL. The plurality of green laser elements 302 are arranged along the Z direction for providing the plurality of green laser beams GL. The plurality of red laser elements 3031 and 3021 are respectively arranged along the Z direction for providing a plurality of red laser beams RL. In the embodiment, the plurality of red laser elements 3031 and 3021 are an array of two rows, but the disclosure is not limited thereto.

Referring to FIG. 3G, different from the wavelength conversion device 40 in the first embodiment, in the embodiment, a wavelength conversion region 401' of a wavelength conversion device 40' may include a red light region 4011, a green light region 4012 and a yellow light region 4013. The yellow light region 4013 is suitable for entering the transmission path of the plurality of blue laser beams BL in a yellow light time period. The yellow light region 4013 may be one of a yellow phosphor powder configured to convert and generate a yellow phosphor light beam PL, a green phosphor powder configured to convert and generate a green phosphor light beam PL, and a red phosphor powder configured to convert and generate a red phosphor light beam PL. In an embodiment, the wavelength conversion device 40 in the first embodiment may also be adopted, but the disclosure is not limited thereto.

Referring to FIG. 3F, in the red light time period T_{RL}, the power P_{BL} of the plurality of blue laser elements 301 is greater than 0 so as to provide the plurality of blue laser beams BL. The power P_{GL} of the plurality of green laser elements 302 is 0, and no green laser beam GL is provided. The power P_{RL} of the plurality of red laser elements 3031 and 3032 is greater than 0 so as to provide the plurality of red laser beams RL.

In the green light time period T_{GL}, the power P_{BL} of the plurality of blue laser elements 301 is greater than 0 so as to provide the plurality of blue laser beams BL. The power P_{GL} of the plurality of green laser elements 302 is greater than 0 so as to provide the plurality of green laser beams GL. The power P_{RL} of the plurality of red laser elements 3031 and 3032 is 0, and no red laser beam RL is provided.

In the blue light time period T_{BL}, the power P_{BL} of the plurality of blue laser elements 301 is greater than 0 so as to provide the plurality of blue laser beams BL. The power P_{GL} of the plurality of green laser elements 302 is 0, and no green laser beam GL is provided. The power P_{RL} of the plurality of red laser elements 3031 and 3032 is 0, and no red laser beam RL is provided.

In the yellow light time period T_{YL}, the power P_{BL} of the plurality of blue laser elements 301 is greater than 0 so as to provide the plurality of blue laser beams BL. The power P_{GL} of the plurality of green laser elements 302 is greater than 0 so as to provide the plurality of green laser beams GL. The power P_{RL} of the plurality of red laser elements 3031, 3032 is greater than 0 so as to provide the plurality of red laser beams RL.

The light source module 30 periodically repeats the red light time period T_{RL}, the green light time period T_{GL}, the blue light time period T_{BL} and the yellow light time period T_{YL} as shown in FIG. 3F.

Referring to FIG. 3B and FIG. 3E, in the embodiment, the second light guiding assembly 20 is further disposed in the transmission path of the plurality of red laser beams RL to guide the plurality of red laser beams RL to the second region A2 of the light incident surface 5011 (i.e., the first side surface 504) of the microlens array module 50, and the plurality of red laser beams RL form a plurality of red light spots RS on the second region A2. Specifically, the second light guiding assembly 20 includes the transflective lens 201, the reflecting mirror 202, a first red light splitter 203 and a second red light splitter 204. The first red light splitter 203 is disposed in the transmission path of a first part of the plurality of red laser beams RL (corresponding to the plurality of red laser elements 3031), and is configured to reflect the first part of the plurality of red laser beams RL to the microlens array module 50, and allow the first part of the plurality of green laser beams GL to pass through. The first part of the plurality of red laser beams RL is transmitted by the first red light splitter 203 of the second light guiding assembly 20 to the first sub-region A21 of the second region A2 of the light incident surface 5011 (i.e., the first side surface 504), so as to form the plurality of red light spots RS in the first sub-region A21. The second red light splitter 204 is disposed in the transmission path of a second part of the plurality of red laser beams RL (corresponding to the plurality of red laser elements 3032), and is configured to reflect the second part of the plurality of red laser beams RL to the microlens array module 50, and allow the second part of the plurality of green laser beams GL to pass through. The second part of the plurality of red laser beams RL is transmitted by the second red light splitter 204 of the second light guiding assembly 20 to the second sub-region A22 of the second region A2 of the light incident surface 5011 (i.e., the first side surface 504), so as to form the plurality of red light spots RS in the second sub-region A22. Orthographic projections of the transflective lens 201 and the first red light splitter 203 on the light incident surface 5011 of the first microlens array element 501 are at least partially overlapped, and orthographic projections of the reflecting mirror 202 and the second red light splitter 204 on the light incident surface 5011 of the first microlens array element 501 are at least partially overlapped. Accordingly, a volume of the illumination system 1 may be reduced.

As shown in FIG. 3D, FIG. 3E and FIG. 3F, in the red light time period T_{RL}, the plurality of blue laser elements 301 are enabled to provide the plurality of blue laser beams BL, and the red light region 4011 of the wavelength conversion region 401' enters the transmission path of the plurality of blue laser beams BL. The phosphor powder in the red light region 4011 of the wavelength conversion region 401' is irradiated by the plurality of blue laser beams BL and generates the phosphor light beam PL. The phosphor light beam PL is guided by the first light guiding assembly 10 and transmitted to the microlens array module 50, and forms a phosphor light spot PS on the first region A1 of the light incident surface 5011 (i.e., the first side surface 504) of the first microlens array element 501. At the same time, the plurality of red laser beams RL provided by the plurality of red laser elements 3031 are reflected by the first red light splitter 203, and then form a plurality of red light spots RS arranged along the Z direction on the first sub-region A21 of the second region A2. The plurality of red laser beams RL provided by the plurality of red laser elements 3032 are reflected by the second red light splitter 204, and then form a plurality of red light spots arranged along the Z direction on the second sub-region A22 of the second region A2. The plurality of red laser beams RL form a plurality of red light spots RS on the first sub-region A21 and the second sub-region A22 respectively, thereby improving the light uniformity of the illumination system 1.

As shown in FIG. 3C, FIG. 3E and FIG. 3F, in the green light time period T_{GL}, the plurality of blue laser elements 301 are enabled to provide the plurality of blue laser beams BL, and the green light region 4012 of the wavelength conversion region 401' enters the transmission path of the plurality of blue laser beams BL. The phosphor powder in the green light region 4012 of the wavelength conversion region 401' is irradiated by the plurality of blue laser beams BL and generates the phosphor light beam PL. The phosphor light beam PL is guided by the first light guiding assembly 10 and transmitted to the microlens array module 50, and forms a phosphor light spot PS on the first region A1 of the light incident surface 5011 (i.e., the first side surface 504) of the first microlens array element 501. At the same time, the first part of the plurality of green laser beams GL provided by the plurality of green laser elements 302 are reflected by the transflective lens 201, and the second part of the plurality of green laser beams GL passes through the transflective lens 201. The first part of the plurality of green laser beams GL are reflected by the transflective lens 201 and pass through the first red light splitter 203 to form a plurality of green light spots GS on the first sub-region A21 of the second region A2. The second part of the plurality of green laser beams GL that passes through the transflective lens 201 is reflected by the reflecting mirror 202, and then passes through the second red light splitter 204 to form a plurality of green light spots GS on the second sub-region A22 of the second region A2.

As shown in FIG. 3A, FIG. 3E and FIG. 3F, in the blue light time period T_{BL}, the plurality of blue laser elements 301 are enabled to provide the plurality of blue laser beams BL, and the wavelength non-conversion region 402 enters the transmission path of the plurality of blue laser beams BL. The plurality of blue laser beams BL are reflected by the wavelength non-conversion region 402 and return to the first light guiding assembly 10. The first light guiding assembly 10 guides the plurality of blue laser beams BL from the wavelength non-conversion region 402 to the first microlens array element 501, and the plurality of blue laser beams BL form a plurality of blue light spots BS on the first region A1 of the light incident surface 5011 (i.e., the first side surface 504), as shown in FIG. 3E.

As shown in FIG. 3B, FIG. 3E, and FIG. 3F, in the yellow light time period T_{YL}, the plurality of blue laser elements 301 are enabled to provide the plurality of blue laser beams BL, and the yellow light region 4013 of the wavelength conversion region 401' enters the transmission path of the plurality of blue laser beams BL. The phosphor powder in the yellow light region 4013 of the wavelength conversion region 401' is irradiated by the plurality of blue laser beams BL and generates the phosphor light beam PL. The phosphor light beam PL is guided by the first light guiding assembly 10 and transmitted to the microlens array module 50, and forms a phosphor light spot PS on the first region A1 of the light incident surface 5011 (i.e., the first side surface 504) of the first microlens array element 501. At the same time, the first part of the plurality of green laser beams GL provided by the plurality of green laser elements 302 is reflected by the transflective lens 201, and the second part of the plurality of green laser beams GL passes through the transflective lens 201. The first part of the plurality of green laser beams GL are reflected by the transflective lens 201 and passes through the first red light splitter 203 to form a plurality of green light spots GS on the first sub-region A21 of the second region A2. The second part of the plurality of green laser beams GL that passes through the transflective lens 201 is reflected by the reflecting mirror 202, and then passes through the second red light splitter 204 to form a plurality of green light spots GS on the second sub-region A21 of the second region A2. Meanwhile, the plurality of red laser beams RL provided by the plurality of red laser elements 3031 are reflected by the first red light splitter 203, and then form a plurality of red light spots RS on the first sub-region A21 of the second region A2. The plurality of red laser beams RL provided by the plurality of red laser elements 3032 are reflected by the second red light splitter 204, and then form a plurality of red light spots RS on the second sub-region A22 of the second region A2.

Through the periodic time periods shown in FIG. 3F, the illumination system 1 of the embodiment may output an illumination beam from the second microlens array element 502 of the microlens array module 50. The illumination beam is emitted from the light output surface 5022 (i.e., the second side surface 505) of the second microlens array element 502, and includes the phosphor light beam PL, the red laser beams RL, the green laser beams GL and the blue laser beams BL in the above-mentioned red light time period T_{RL}, green light time period T_{GL}, blue light time period T_{BL} and yellow light time period T_{YL}.

In the embodiment, positions of the plurality of red light spots RS on the first sub-region A21 and the second sub-region A22 may be at least partially overlapped with positions of the plurality of green light spots GS on the first sub-region A21 and the second sub-region A22. Based on this, a size of the light incident surface 5011 of the first microlens array element 501 may be reduced, but the disclosure is not limited thereto. In some embodiments, the positions of the plurality of red light spots RS and the positions of the plurality of green light spots GS may be completely nonoverlapping. In addition, the number of the plurality of red light spots RS on the first sub-region A21 and the second sub-region A22 may be the same as or different from the number of the plurality of green light spots GS.

Referring to FIG. 2I to FIG. 2K, as the luminescence waveband of the phosphor light beam PL in the embodiment fully covers the luminescence wavebands of the red laser beams RL and the green laser beams GL, if the second light guiding assembly 20 is configured in the transmission path of the phosphor light beam PL, the transflective lens 201, the first red light splitter 203 and the second red light splitter 204 may probably cause certain wavebands of the phosphor light beam PL to be reflected, and the reflecting mirror 202 may also block the propagation of the phosphor light beam PL, resulting in energy loss. Therefore, in the embodiment, an orthogonal projection of the effective optical region of the light splitting element 101 on the light incident surface 5011 (i.e., the first side surface 504) of the first microlens array element 501 is not overlapped with an orthogonal projection of the second light guiding assembly 20 on the light incident surface 5011 (i.e., the first side surface 504). Therefore, energy loss of the phosphor light beam PL may be avoided.

In addition, in the embodiment, the phosphor light spot PS is formed on the first region A1 of the light incident surface 5011 (i.e., the first side surface 504), and the plurality of green spots GS and the plurality of red spots RS are formed on the second region A2 that is adjacent to and not overlapped with the first region A1 (as shown in FIG. 3E). By configuring the focusing lens element 503 between the first microlens array element 501 and the second microlens array element 502, the light spots of the plurality of green laser beams GL and the plurality of red laser beams RL on the light incident surface 5021 of the second microlens array element 502 may at least partially overlap the light spots of the phosphor light beam PL (as shown in FIG. 3C). More specifically, as shown in FIG. 3A, FIG. 3B, FIG. 3C and FIG. 3D, on the light incident surface 5021 of the second microlens array element 502, the plurality of light spots of the phosphor light beam PL, the plurality of red laser beams RL, the plurality of green laser beams GL, and the plurality of blue light beams BL at least partially overlap to form an overlapping region, so that the illumination system 1 has good light uniformity.

It should be noted that FIG. 3E is a schematic diagram simultaneously illustrating light spots on the first microlens array element 501 in FIG. 3A, FIG. 3B, FIG. 3C and FIG. 3D, which is a schematic diagram of superimposition of the light spots of various color light in all time periods. However, the time periods at which the plurality of light spots respectively appear on the light incident surface 5011 of the first microlens array element 501 are subject to the above content.

In the embodiment, the plurality of green laser elements 302 are located between the plurality of blue laser elements 301 and the plurality of red laser elements 3031 and 3032. Correspondingly, the transflective lens 201 is located between the first light guiding assembly 10 and the first red light splitter 203, and the reflecting mirror 202 is located between the first light guiding assembly 10 and the second red light splitter 204. However, the disclosure is not limited thereto. According to another embodiment of the disclosure, the plurality of blue laser elements 301 are disposed between the plurality of green laser elements 302 and the plurality of red laser elements 3031 and 3032. Correspondingly, the first light guiding assembly 10 is disposed between the transflective lens 201 and the first red light splitter 203, and the first light guiding assembly 10 is disposed between the reflecting mirror 202 and the second red light splitter 204.

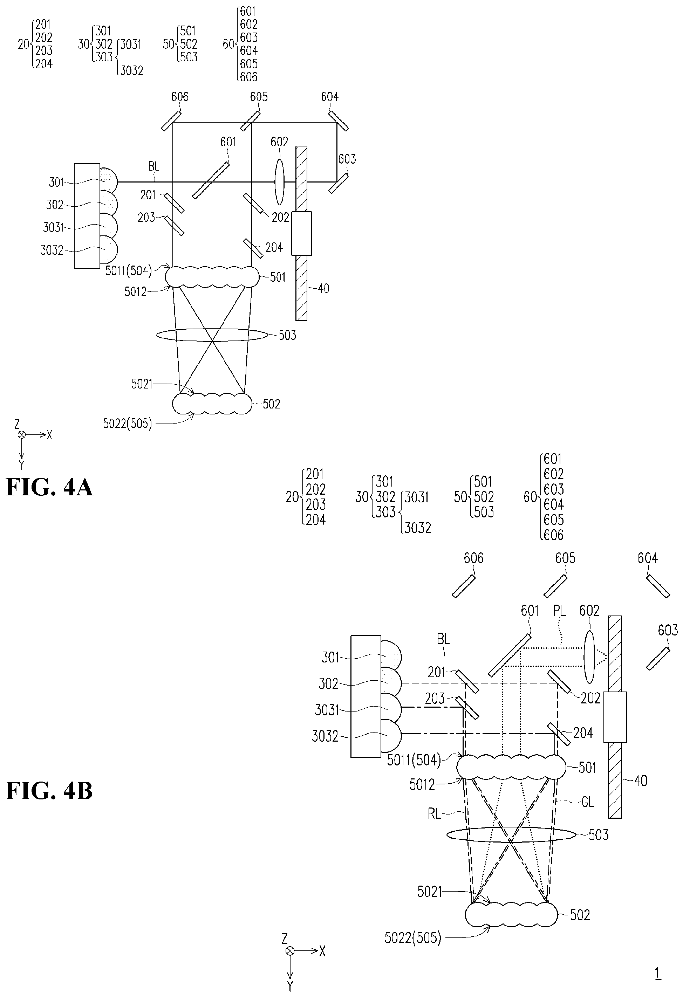

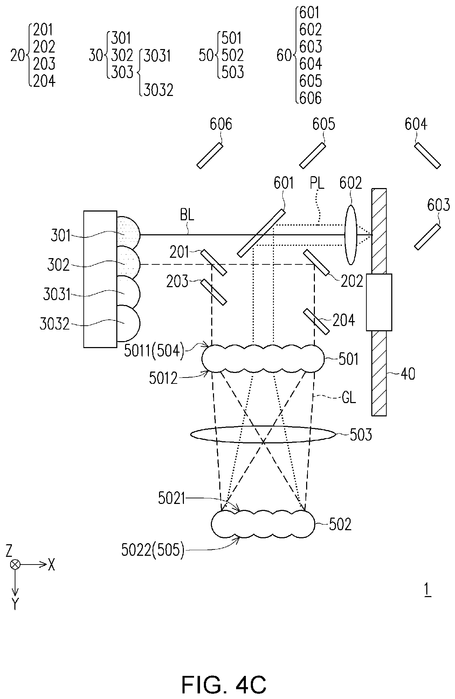

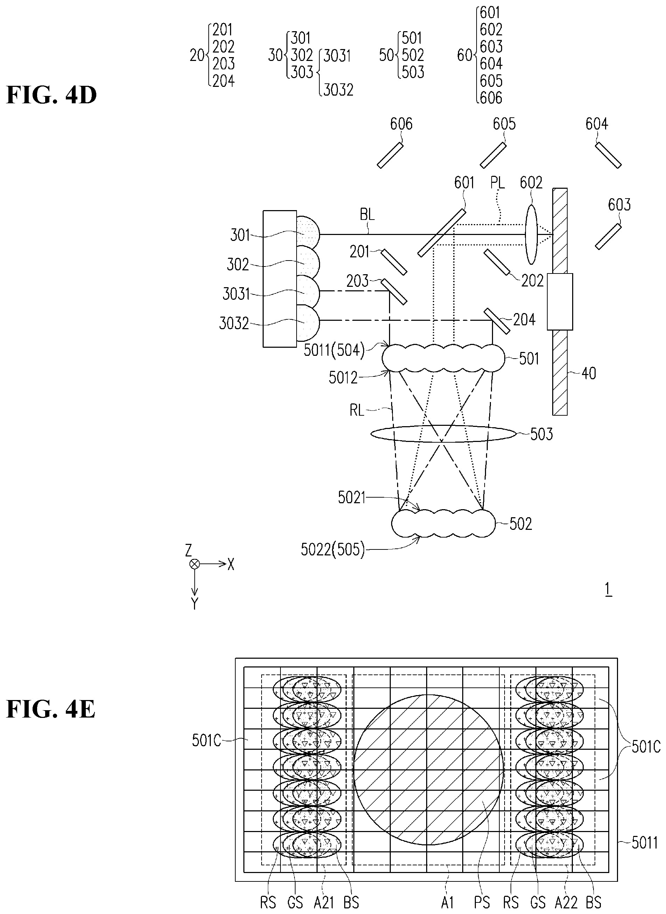

Referring to FIG. 4A to FIG. 4E. FIG. 4A, FIG. 4B, FIG. 4C and FIG. 4D are schematic diagrams of an illumination system of a third embodiment. FIG. 4E is a schematic diagram illustrating light spots on the first microlens array element 501 in FIG. 4A, FIG. 4B, FIG. 4C and FIG. 4D.

In the aforementioned first and second embodiments, the wavelength non-conversion region 402 of the wavelength conversion devices 40, 40' is suitable for reflecting the plurality of blue laser beams BL, that is, the wavelength conversion devices 40, 40' are reflective color wheels. However, in the third embodiment, the wavelength conversion device 40 is a transmissive color wheel, which means that the wavelength non-conversion region 402 is suitable for the plurality of blue laser beams BL to pass through. In addition, the first light guiding assembly 60 of the embodiment is configured to guide the plurality of blue laser beams BL from the wavelength non-conversion region 402 to the microlens array module 50. The plurality of blue laser beams BL are guided by the first light guiding assembly 60 to form a plurality of blue light spots BS on the second region A2 of the light incident surface 5011 (i.e., the first side surface 504) of the microlens array module 50. Specifically, the first light guiding assembly 60 includes a red-green light splitting element 601, a focusing lens 602, a turning assembly, a transflective lens 605 and a reflecting mirror 606. Reflecting mirrors 603 and 604 constitute the turning assembly. The red-green light splitting element 601 is located between the light source module 30 and the wavelength conversion device 40, and is suitable for allowing the plurality of blue laser beams BL from the light source module 30 to pass through and reflecting the phosphor light beam PL from the wavelength conversion regions 4011, 4012, and 4013, so as to transmit the phosphor light beam PL to the first region A1 of the microlens array module 50. The turning assembly may be composed of the reflecting mirrors 603 and 604, and is disposed at an end of the wavelength conversion device 40 relatively far away from the light source module 30, and configured to transmit the plurality of blue laser beams BL passing through the wavelength non-conversion region 402 to the transflective lens 605. The first part of the plurality of blue laser beams BL from the wavelength conversion device 40 passes through the transflective lens 605, and the transflective lens 605 reflects the second part of the plurality of blue laser beams BL. The reflecting mirror 606 is disposed in a transmission path of the first part of the plurality of blue laser beams BL, and is configured to reflect the first part of the plurality of blue laser beams BL. In an embodiment, the transflective lens 605 may transmit and reflect the plurality of blue laser beams BL at a ratio of 50% each. However, in other embodiments, the ratio of transmission and reflection of the transflective lens 605 may be adjusted according to actual needs, which is not limited by the disclosure.

The first part of the plurality of blue laser beams BL is transmitted to the first sub-region A21 of the microlens array module 50 by the first light guiding assembly 60 to form a plurality of blue light spots BS on the first sub-region A21. The second part of the plurality of blue laser beams BL is transmitted to the second sub-region A22 of the microlens array module 50 by the first light guiding assembly 60 to form a plurality of blue light spots BS on the second sub-region A22.

In addition, in the embodiment, the phosphor light spot PS is formed on the first region A1 of the light incident surface 5011 (i.e., the first side surface 504), and the plurality of green light spots GS and the plurality of red light spots RS are formed on the second region A2 that is adjacent to and non-overlapped to the first region A1 (as shown in FIG. 4E). By disposing the focusing lens element 503 between the first microlens array element 501 and the second microlens array element 502, the plurality of light spots of the plurality of green laser beams GL and the plurality of red laser beams RL on the light incident surface 5021 of the second microlens array element 502 may at least partially overlap the light spot of the phosphor light beam PL (as shown in FIG. 4C). More specifically, as shown in FIG. 4A, FIG. 4B, FIG. 4C and FIG. 4D, on the light incident surface 5021 of the second microlens array element 502, the plurality of light spots of the phosphor light beam PL, the plurality of red laser beams RL, the plurality of green laser beams RL and the plurality of blue laser beams BL at least partially overlap to form an overlapping region, so that the illumination system 1 has good light uniformity.

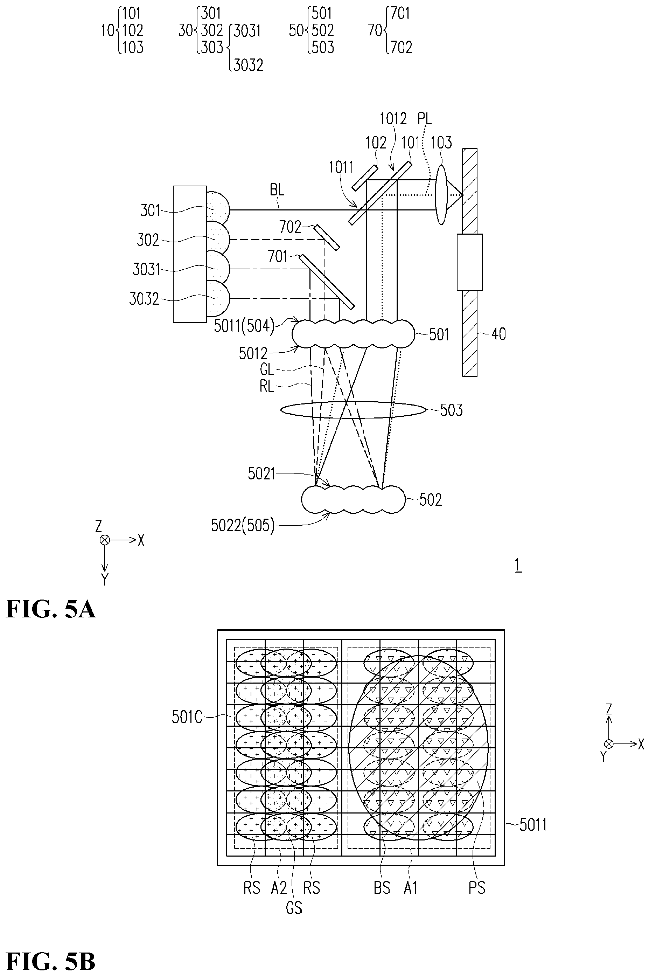

Referring to FIG. 5A and FIG. 5B, FIG. 5A is a schematic diagram of an illumination system according to a fourth embodiment of the disclosure. FIG. 5B is a schematic diagram of light spots on a first microlens array element in FIG. 5A. For the convenience of understanding, FIG. 5A is a schematic diagram simultaneously showing light paths of the illumination system 1 for different time periods.

A difference between the fourth embodiment and the aforementioned second embodiment is that the second light guiding assembly 70 of the embodiment includes a red light splitter 701 and a reflecting mirror 702. The reflecting mirror 702 is configured to reflect the plurality of green laser beams GL provided by the plurality of green laser elements 302. The red beam splitter 701 is configured to reflect the plurality of red laser beams RL provided by the plurality of red laser elements 3031 and 3032, and to allow the plurality of green laser beams GL from the reflecting mirror 702 to pass through. The plurality of green laser beams GL from the light source module 30 form the plurality of green light spots GS on the second region A2 after sequentially being reflected by the reflecting mirror 702 and passing through the red light splitter 701. The plurality of red laser beams RL from the light source module 30 are reflected by the red light splitter 701, and then form a plurality of red light spots RS on the second region A2.

In the embodiment, the phosphor light spot PS is formed on the first region A1 of the light incident surface 5011 (i.e., the first side surface 504), and the plurality of green light spots GS and the plurality of red light spots RS are formed on the second region A2 that is adjacent to and not overlapped to the first region A1 (as shown in FIG. 5B). By disposing the focusing lens element 503 between the first microlens array element 501 and the second microlens array element 502, the plurality of light spots of the plurality of green laser beams GL and the plurality of red laser beams RL on the light incident surface 5021 of the second microlens array element 502 may at least partially overlap the light spot of the phosphor light beam PL (as shown in FIG. 5A). More specifically, as shown in FIG. 5A, on the light incident surface 5021 of the second microlens array element 502, the plurality of light spots of the phosphor beam PL, the plurality of red laser beams RL, the plurality of green laser beams GL and the plurality of blue laser beams BL at least partially overlap to form an overlapping region, so that the illumination system 1 has good light uniformity.

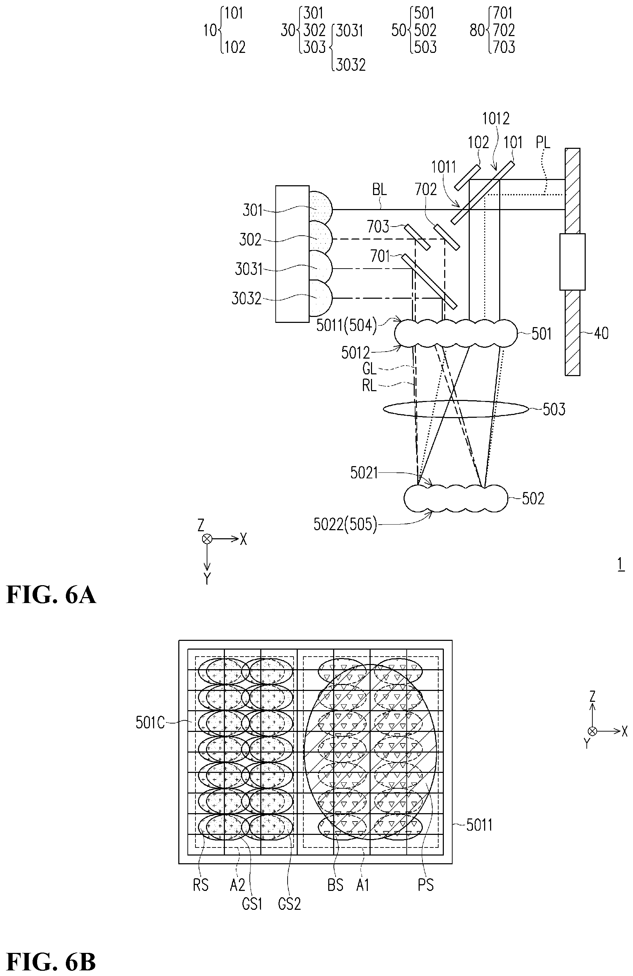

Referring to FIG. 6A and FIG. 6B. FIG.6A is a schematic diagram of an illumination system according to a fifth embodiment of the disclosure. FIG. 6B is a schematic diagram of light spots on a first microlens array element in FIG. 6A. For the convenience of understanding, FIG. 6A is a schematic diagram simultaneously showing light paths of the illumination system 1 for different time periods.

A difference between the fifth embodiment and the aforementioned fourth embodiment is that a second light guiding assembly 80 of the embodiment includes the red light splitter 701, the reflecting mirror 702 and a transflective lens 703. The transflective lens 703 is configured to reflect the first part of the plurality of green laser beams GL provided by the plurality of green laser elements 302, and the second part of the plurality of green laser beams GL passes through the transflective lens 703. In an embodiment, the transflective lens 703 may transmit and reflect the plurality of green laser beams GL at a ratio of 50% each. However, in other embodiments, the ratio of transmission and reflection of the transflective lens 703 may be adjusted according to actual needs, which is not limited by the disclosure. The reflecting mirror 702 is disposed in the transmission path of the second part of the plurality of green laser beams GL to reflect the second part of the plurality of green laser beams GL. The red light splitter 701 is configured to reflect the plurality of red laser beams RL provided by the plurality of red laser elements 3031 and 3032, and allow the first part of the plurality of green laser beams GL and the second part of the plurality of green laser beams GL from the transflective lens 703 and the reflecting mirror 702 to pass through. The first part of the plurality of green laser beams GL forms a plurality of green light spots GS1 on the second region A2 after passing through the red light splitter 701. The second part of the plurality of green laser beams GL forms a plurality of green light spots GS2 on the second region A2 after passing through the red light splitter 701. Accordingly, the plurality of green laser beams GL may form a plurality of green light spots GS in two columns on the second region A2.

In the embodiment, the phosphor light spot PS is formed on the first region A1 of the light incident surface 5011 (i.e., the first side surface 504), and the plurality of green light spots GS and the plurality of red light spots RS are formed on the second region A2 that is not adjacent to and not overlapped to the first region A1 (as shown in FIG. 6B). By disposing the focusing lens element 503 between the first microlens array element 501 and the second microlens array element 502, the plurality of light spots of the plurality of green laser beams GL and the plurality of red laser beams RL on the light incident surface 5021 of the second microlens array element 502 may at least partially overlap the light spot of the phosphor light beam PL (as shown in FIG. 6A). More specifically, as shown in FIG. 6A, on the light incident surface 5021 of the second microlens array element 502, the plurality of light spots of the phosphor beam PL, the plurality of red laser beams RL, the plurality of green laser beams GL and the plurality of blue laser beams BL at least partially overlap to form an overlapping region, so that the illumination system 1 has good light uniformity.

In summary, in the illumination system according to the embodiment of the disclosure, the phosphor light beam will not be blocked by the second light guiding assembly, so that the phosphor light spot and the green light spots (or red light spots) will not overlap with each other on the light incident surface of the first microlens array element. Accordingly, energy loss in the illumination system may be avoided. In addition, the plurality of light spots of the phosphor light beam, the plurality of red laser beams, the plurality of green laser beams and the plurality of blue laser beams at least partially overlap on the light incident surface of the second microlens array element, so that the illumination system has good light uniformity.

The disclosure provides optical path design so that in a single time period, when the color light beam (such as the green laser beam or the red laser beam) that has a waveband overlapped with the waveband of the phosphor light beam is incident to the microlens array module, the positions of the generated light spots are separated from the phosphor light spot. The phosphor light beam and the laser beams are spatially combined through the microlens array module, which may achieve a light combining effect without sacrificing the color lights beam having an overlapped waveband and improve the light uniformity of the illumination system.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by person skilled in the art without departing from the scope of the invention as defined by the following claims. Moreover, no element and component in the disclosure is intended to be dedicated to the public regardless of whether the element or component is explicitly recited in the following claims.

## Claims

1. An illumination system (1), adapted to provide an illumination beam, and comprising a light source module (30), a wavelength conversion device (40), a first light guiding assembly (10), a second light guiding assembly (20) and a microlens array module (50), wherein
the light source module (30) is configured to provide a plurality of green laser beams (GL) and a plurality of blue laser beams (BL),
the wavelength conversion device (40) comprises a wavelength conversion region (401) and a wavelength non-conversion region (402), wherein the wavelength conversion region (401) and the wavelength non-conversion region (402) are adapted to enter a transmission path of the plurality of blue laser beams (BL) at different time periods, and the wavelength conversion region (401) is configured to convert the plurality of blue laser beams (BL) to generate a phosphor light beam (PL),
the microlens array module (50) is disposed in a transmission path of the plurality of green laser beams (GL), the transmission path of the plurality of blue laser beams (BL) and a transmission path of the phosphor light beam (PL), and the plurality of green laser beams (GL), the plurality of blue laser beams (BL) and the phosphor light beam (PL) are incident to the microlens array module (50) via a first side surface (504) of the microlens array module (50), the first side surface (504) comprises a first region (A1) and a second region (A2) adjacent with each other, and the plurality of green laser beams (GL), the plurality of blue laser beams (BL) and the phosphor light beam (PL) are emitted from a second side surface (505) of the microlens array module (50) to serve as the illumination beam;
the first light guiding assembly (10) is disposed in the transmission path of the plurality of blue laser beams (BL) to guide the plurality of blue laser beams (BL) from the light source module (30) to the wavelength conversion device (40), and guide the phosphor light beam (PL) from the wavelength conversion region (401) to the first region (A1) of the first side surface (504) of the microlens array module (50), and the phosphor light beam (PL) forms a phosphor light spot (PS) on the first region (A1),
the second light guiding assembly (20) is disposed in the transmission path of the plurality of green laser beams (GL) to guide the plurality of green laser beams (GL) to the second region (A2) of the first side surface (504) of the microlens array module (50), and the plurality of green laser beams (GL) form a plurality of green light spots (GS) on the second region (A2).

2. The illumination system as claimed in claim 1, wherein the first light guiding assembly (10) is further configured to guide the plurality of blue laser beams (BL) from the wavelength non-conversion region (402) to the first region (A1) of the first side surface (504) of the microlens array module (50), and the plurality of blue laser beams (BL) form a plurality of blue light spots (BS) on the first region (A1).

3. The illumination system as claimed in claim 1 or 2, wherein the first light guiding assembly (10) comprises a light splitting element (101) located between the light source module (30) and the wavelength conversion device (40), the light splitting element (101) comprises an effective optical region, and the effective optical region is configured to allow the plurality of blue laser beams (BL) from the light source module (30) to pass through and reflect the phosphor light beam (PL) from the wavelength conversion device (40), and an orthogonal projection of the effective optical region on the first side surface (504) of the microlens array module (50) is not overlapped with an orthogonal projection of the second light guiding assembly (20) on the first side surface (504) of the microlens array module (50).

4. The illumination system as claimed in claim 3, wherein the first light guiding assembly (10) further comprises a reflecting mirror (102), wherein the effective optical region comprises a first sub-effective region (1011) and a second sub-effective region (1012) , the first sub-effective region (1011) is configured to allow the plurality of blue laser beams (BL) transmitted from the light source module (30) to the wavelength conversion device (40) to pass through, the second sub-effective region (1012) is configured to reflect a first part of the plurality of blue laser beams (BL) from the wavelength non-conversion region (402), and to allow a second part of the plurality of blue laser beams (BL) from the wavelength non-conversion region (401) to pass through, and the reflecting mirror (102) is disposed in a transmission path of the second part of the plurality of blue laser beams (BL) to reflect the second part of the plurality of blue laser beams (BL).

5. The illumination system as claimed in any one of the preceding claims, wherein the second light guiding assembly (20) comprises a reflecting mirror (202) for reflecting the plurality of green laser beams (GL) to the second region (A2) of the first side surface (504) of the microlens array module (50).

6. The illumination system as claimed in claim 5, wherein the second light guiding assembly (20) further comprises a transflective lens (201) for reflecting a first part of the plurality of green laser beams (GL) from the light source module (30) and allowing a second part of the plurality of green laser beams (GL) to pass through, and the reflecting mirror (202) of the second light guiding assembly (20) is disposed in a transmission path of the second part of the plurality of green laser beams (GL) to reflect the second part of the plurality of green laser beams (GL).

7. The illumination system as claimed in claim 6, wherein the second region (A2) of the first side surface (504) of the microlens array module (50) comprises a first sub-region (A21) and a second sub-region (A22), the first sub-region (A21) and the second sub-region (A22) are respectively adjacent to the first region (A1), and the first region (A1) is located between the first sub-region (A21) and the second sub-region (A22), the first part of the plurality of green laser beams (GL) is transmitted to the first sub-region (A21) by the transflective lens (201), and the second part of the plurality of green laser beams (GL) is transmitted to the second sub-region (A22) by the reflecting mirror (202) of the second light guiding assembly (20).

8. The illumination system as claimed in any one of the preceding claims, wherein the light source module (30) is further configured to provide a plurality of red laser beams (RL), and the second light guiding assembly (20) is further disposed in a transmission path of the plurality of red laser beams (RL) to guide the plurality of red laser beams (RL) to the second region (A2) of the first side surface (504) of the microlens array module (50), and the plurality of red laser beams (RL) form a plurality of red light spots (RS) on the second region (A2).

9. The illumination system as claimed in claim 8, wherein the second light guiding assembly (20) comprises a first red light splitter (203), the first red light splitter (203) is disposed in a transmission path of a first part of the plurality of red laser beams (RL) to reflect the first part of the plurality of red laser beams (RL) to the microlens array module (50), and to allow a first part of the plurality of green laser light beams (GL) to pass through and/or the second light guiding assembly (20) further comprises a second red light splitter (204), the second red light splitter (204) is disposed in a transmission path of a second part of the plurality of red laser beams (RL) to reflect the second part of the plurality of red laser beams (RL) to the microlens array module (50), and to allow a second part of the plurality of green laser beams (GL) to pass through.

10. The illumination system as claimed in claim 9, wherein the second region (A2) of the first side surface (504) of the microlens array module (50) comprises a first sub-region (A21) and a second sub-region (A22), the first sub-region (A21) and the second sub-region (A22) are respectively adjacent to the first region (A1), and the first region (A1) is located between the first sub-region (A21) and the second sub-region (A22), the first part of the plurality of red laser beams (RL) is transmitted to the first sub-region (A21) by the second light guiding assembly (20), and the second part of the plurality of red laser beams (RL) is transmitted to the second sub-region (A22) by the second light guiding assembly (20).

11. The illumination system as claimed in any one of the preceding claims, wherein the first light guiding assembly (10) is further configured to guide the plurality of blue laser beams (BL) from the wavelength non-conversion region (402) to the microlens array module (50), and the plurality of blue laser beams (BL) is guide by the first light guiding assembly (10) to form a plurality of blue light spots (BS) on the second region (A2) of the first side surface (504) of the microlens array module (50).

12. The illumination system as claimed in claim 11, wherein the first light guiding assembly (10) comprises a red-green light splitting element (601), a turning assembly, a transflective lens (605), and a reflecting mirror (606), the red-green light splitting element (601) is located between the light source module (30) and the wavelength conversion device (40), and is configured to allow the plurality of blue laser beams (BL) from the light source module (30) to pass through, and to reflect the phosphor light beam (PL) from the wavelength conversion region (401) so as to transmit the phosphor light beam (PL) to the first region (A1) of the microlens array module (50), the turning assembly is disposed at an end of the wavelength conversion device (40) relatively far away from the light source module (30) to transmit the plurality of blue laser beams (BL) passing through the wavelength non-conversion region (401) to the transflective lens (605), the transflective lens (605) is configured to allow a first part of the plurality of blue laser beams (BL) from the wavelength conversion device (40) to pass through, and to reflect a second part of the plurality of blue laser beams (BL), the reflecting mirror (606) is disposed in a transmission path of the first part of the plurality of blue laser beams (BL) to reflect the first part of the plurality of blue laser beams (BL), preferably the second region (A2) of the first side surface (504) of the microlens array module (50) comprises a first sub-region (A21) and a second sub-region (A22), the first sub-region (A21) and the second sub-region (A22) are respectively adjacent to the first region (A1), and the first region (A1) is located between the first sub-region (A21) and the second sub-region (A22), the first part of the plurality of blue laser beams (BL) is transmitted to the first sub-region (A21) of the microlens array module (50) by the first light guiding assembly (10), and the second part of the plurality of blue laser beams (BL) is transmitted to the second sub-region (A21) of the microlens array module (50) by the first light guiding assembly (10).

13. The illumination system as claimed in any one of the preceding claims, wherein the microlens array module (50) comprises a first microlens array element (501), a focusing lens element (503) and a second microlens array element (502), wherein the focusing lens element (502) is located between the first microlens array element (501) and the second microlens array element (502), the first microlens array element (501) has the first side surface (504), and the second microlens array element (502) has the second side surface (505), the plurality of green laser beams (GL), the plurality of blue laser beams (BL) and the phosphor light beam (PL) enter the microlens array module (50) via the first side surface (504) of the first microlens array element (501), and are emitted from the second side surface (505) of the second microlens array element (502) after passing through the focusing lens element (503).

14. The illumination system as claimed in claim 13, wherein the first microlens array element (501) is an integrated double-sided microlens array structural element, or is composed of two single-sided microlens array structural elements arranged by facing away from each other, and the second microlens array element (502) is an integrated double-sided microlens array element, or is composed of two single-sided microlens array structural elements arranged by facing away from each other, and/or a light incident surface (5011) of the first microlens array element (501) is the first side surface (504), the first side surface (504) has a plurality of first micromirror structures (501C), a light output surface (5012) of the first microlens array element (501) has a plurality of second micromirror structures, and the plurality of first micromirror structures (501C) respectively correspond to the plurality of second micromirror structures; and/or a plurality of light spots of the plurality of green laser beams (GL), the plurality of blue laser beams (BL) and the phosphor light beam (PL) on a light incident surface (5011) of the second microlens array element (502) at least partially overlap to form an overlapping region, preferably a ratio of an area of the overlapping region to an area of the light spot of the phosphor light beam (PL) on the second side surface of the second microlens array element (502) is greater than 0.5.

15. A projection apparatus, comprising the illumination system as claimed in any one of the preceding claims, a light modulation system (2) and a projection lens (3), wherein the illumination system (1) is configured to provide the illumination beam, the light modulation system (2) is configured to convert the illumination beam to provide an image beam, and the projection lens (3) is configured to project the image beam out of the projection apparatus.
